# EUROPEAN PATENT SPECIFICATION

(11) **EP 0 899 691 B1**
(45) Date of publication and mention of the grant of the patent: **06.06.2001**
(21) Application number: 98305992.4
(22) Date of filing: 28.07.1998
(51) Int. Cl.: G06T 15/00

(54) **Three dimensional virtual reality enhancement techniques**
Verbesserungstechniken für dreidimensionale virtuelle Realität
Technique d'amélioration pour réalité virtuelle tridimensionnelle

(30) Priority: 04.08.1997 US 55384 P; 26.09.1997 US 938304
(43) Date of publication of application: 03.03.1999
(73) Proprietor: LUCENT TECHNOLOGIES INC., Murray Hill, New Jersey 07974-0636 (US)
(72) Inventor: Aho, Alfred Vaino, Chatham, New Jersey 07928 (US); Ahuja, Sudhir Raman, Little Silver, New Jersey 07739 (US); Carraro, Gianpaolo U., Red Bank, New Jersey 07701 (US); Ensor, James Robert, Red Bank, New Jersey 07701 (US); Rosenthal, Eugene J., Edison, New Jersey 08817 (US)
(74) Representative: Watts, Christopher Malcolm Kelway, Dr.

(56) References cited:
- GB-A- 2 256 567
- US-A- 4 970 666
- US-A- 5 479 597
- US-A- 5 577 981
- HOUSE G: "GOING TO THE SHOPPING MALL VIA VR" VIRTUAL REALITY WORLD, vol. 2, no. 6, 1 November 1994 (1994-11-01), pages 41-43, XP002057487
- BENFORD S ET AL: "SUPPORTING COOPERATIVE WORK IN VIRTUAL ENVIRONMENTS" COMPUTER JOURNAL, vol. 37, no. 8, 12 January 1995 (1995-01-12), pages 653-668, XP000486153 ISSN: 0010-4620

## Description

### Technical Field

This invention relates to the integration of computer graphics and video to provide a realistic three dimensional virtual reality experience.

### Background of the Invention

The display of a three dimensional world to a viewer requires considerable computation power, and it is typically costly to develop the necessary highly detailed models required for doing so. In order to simplify the problem, a portion of the world that is in the distance may be represented in only two dimensions as a video displayed on a surface, e.g., a screen. By video it is meant the common usage of the term, such as the placing or projecting of predefined images on the surface, e.g., the electronic version of filmed moving pictures. Thus, such a world is essentially truncated in length to the screen on which the video is displayed. A great reduction in computation power and cost can be achieved by such an arrangement.

In GB-A-2 328 102 (published on 10^{th} Feb. 1999) it was recognized that a limitation of such a world occurs when an object within the field represented by the video undergoes a trajectory that takes it to a location in the world that is not represented by the video but instead is a location in the foreground which is represented by computer graphics, namely, any portion of the object that is no longer on the video screen, disappears. Therefore, when an object within the field represented by the video undergoes a trajectory that takes it, or a portion thereof, to a location in the world that is not represented by the video but instead is a location in the foreground which is represented by computer graphics, such an object or portion is made to continue to be visible to the user and is represented at the foreground location using computer graphic techniques, rather than video. Thus, the video object "pops" out of the video and becomes visible, e.g., in front of, or to the side of, the video screen, rather than becoming invisible because it is no longer on the video screen.

US-A-4 970 666 discloses a system and method for producing highly realistic video images which depict the appearance of a simulated structure in an actual environment, and provides for accurate placement of the structure in the environment and matching of the perspective of the structure with that of the environment so that a highly realistic result is achieved.

Benford et al, in The Computer Journal, vol 37, no[8], 1994, pages 653 - 668, `Supporting Cooperative Work in Virtual Environments', disclose a system known as DIVE (Distributed Interactive Virtual Environment). Displays can include composite images including, for example a video screen within a computer graphics scene.

### Summary of the Invention

We have recognized that, for a world that has a portion of the world distant from the point of view of the user represented in only two dimensions as a video on a video screen, when an object on the video screen undergoes a trajectory that takes at least a portion of it to a location in the world that is not represented by the video but instead is a location in the world that is represented by computer graphics, in addition to being able to continue to see such an object when it is popped out from the video into the computer graphics part of the world, it is advantageous for one to be able to interact with such an object. Therefore, in accordance with the principles of the invention, an object which pops out from a video into the computer graphics part of the world may be "investigated" by a viewer of the world. One way that this may be achieved is by receiving an indication of a selection of such an object by a user and, in response thereto, providing the user with additional information about the selected object. Another way that this may be achieved is by receiving an indication of a selection of such an object by a user and, in response thereto, allowing the user to explore within the selected object.

For example, if the user is bicycling down the Champs Elysees in Paris, France, as one approaches La Place de l'Etoile in the center of which is the Arc de Triomphe, built by Napoleon Bonaparte, and the Arc de Triomphe as it is passed by the bicyclist pops out of the video, the user could click on the popped-out Arc de Triomphe which is now in the computer graphics part of the world and obtain historical information about it, e.g., displayed in a window on the screen. Alternatively, if the user is represented in the world as an avatar riding on a bicycle, the user avatar, in response to appropriate commands, such as mouse clicks, could be made to dismount the bicycle and further investigate the Arc de Triomphe, e.g., entering therein, ascending a set of stairs and looking out from one or more viewpoints. The user could then return to his bicycle and continue his journey in the world which has a portion of the world distant from the point of view of the user represented in only two dimensions as a video on the video screen and the remainder of the world as computer graphics.

As another example, the user could enter a store which popped out of the video, and engage in virtual shopping therein. In accordance with an aspect of the invention, the particular store which is actually entered may be customized on a per user basis. Thus, for different users who are traversing the same course and seeing the same representations, e.g., an avatar, of a store or vendor cart that popped out from the video, who the particular vendor is that will serve the user and provide him with the virtual shopping service may be different for different users. In accordance with an aspect of the invention, the particular vendor may be selected as a function of the actual geographic location of the user, or a particular location that is associated with the user. If two or more users are simultaneously exploring the same world together, e.g., two friends bicycling together, in accordance with an aspect of the invention, each user, or different subsets of the users, may be served by a different vendor, e.g., as a function of specified parameter, such as their individual geographic locations. Alternatively, even if there is more than one user, and such users would otherwise be served by different vendors, e.g., as a function of their respective locations, in accordance with an aspect of the invention, such users could specify that a subset, or all of them, should be served by a single vendor.

In accordance with another aspect of the invention, when the proprietor of a virtual store, or his representative, e.g., electronic agent, detects the avatar of one or more persons in the vicinity of, e.g., passing, the avatar of a store for which such proprietor's store corresponds to the virtual store for such passing persons, a message, such as an advertisement, or other communication, such as opening a communication channel, e.g., a chat service or voice communication channel, may be transmitted to, or initiated with, such passing persons. The communication may be general in nature or it may be customized as a function of information available regarding the passing persons. Advantageously, a feeling of community may be engendered in the virtual environment

### Brief Description of the Drawing

In the drawing:
FIGs. 1-3 show an example of a video object "popping" out of a video and so becoming visible in front of, or to the side of, the video screen;
FIG. 4 shows an exemplary process by which objects within the field represented by the video surface that, due to their projected motion are to be in the three dimensional world, are so displayed using computer graphics techniques, e.g., the object "pops out" of the video surface;
FIG. 5 shows another exemplary process by which objects within the field represented by the video surface that, due to their projected motion are to be in the three dimensional world, are so displayed using computer graphics techniques; and
FIG. 6 shows steps of a process by which aspects of the invention may be implemented.

### Detailed Description

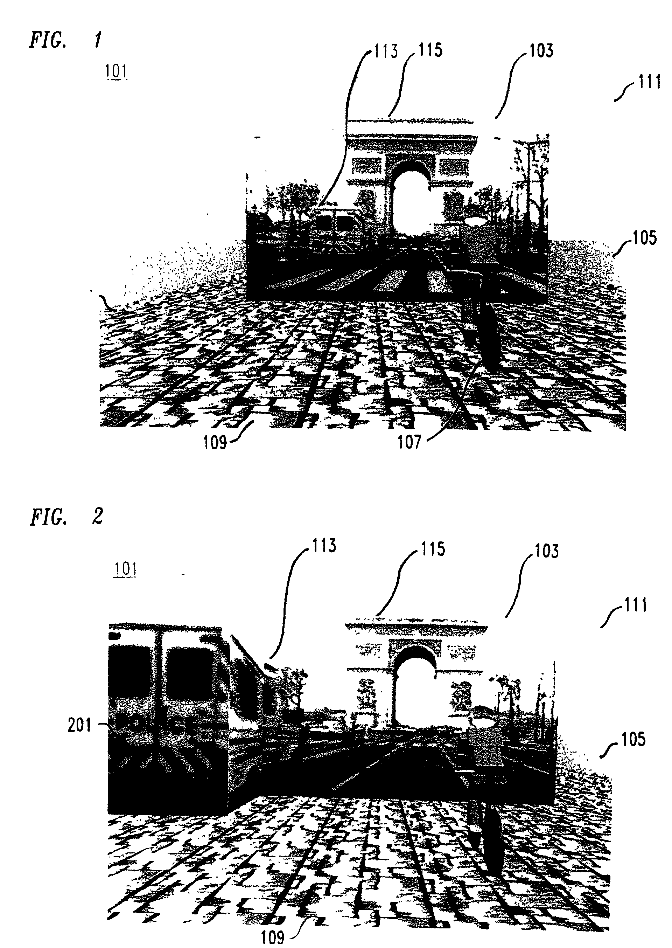

Before describing how an object which pops out from a video into the computer graphics part of the world may be "investigated" by a viewer of the world, in accordance with the principles of the invention, an example of a video object "popping" out of the video and becoming visible in front of, to the side of, above, or below the video screen, rather than simply becoming invisible because it is no longer on the video screen, is shown in FIGs. 1-3. For simplification of terminology purposes, a portion of an object may simply be referred to as an object, since any portion of an object may be considered an object in its own right.

FIG. 1 shows world 101, which is the Champs Elysees in Paris, France, as one approaches La Place de l'Etoile in the center of which is the Arc de Triomphe, built by Napoleon Bonaparte. World 101 is divided into two portions, video screen 103, on which is shown the current frame of a video and the remainder of the world 105, which is represented using computer graphics techniques, and is thus referred to herein as computer graphics part (CG Part) 105. The current frame of video being displayed on video screen 103 includes police van 113 and Arc de Triumph 115. Within CG Part 105 there are various elements, such as bicyclist 107, representing the user, road 109, and sky 111.

Note that the viewpoint of the user is actually behind the representation of the user in the form of bicyclist 107. Also note that police van 113, which is part of the current video frame being shown on video screen 103, is moving slower than bicyclist 107, so that police van 113 will eventually be passed by bicyclist 107 as he continues to ride toward Arc de Triumph 115.

FIG. 2 shows world 101 of FIG. 1, but at a later time. At the time of FIG. 2, the frame of video being shown on screen 103 is from a view closer to Arc de Triumph 115. Such a frame may have resulted, for example, from moving the camera that captured the video closer to Arc de Triumph 115. As a result of the camera location when the frame of video on screen 103 that is shown in FIG. 2 was taken, only a portion of police van 113 was captured video frame. The rest of the police van 113 was out of view of the camera, and hence is not visible within the current frame of video on screen 103 that is shown in FIG. 2. However, from the viewpoint of the user, looking at world 101 as it appears in FIG. 2, the remaining portion of police van 113 should be visible, notwithstanding that it is no longer within the boundaries of video screen 103. Therefore, the remaining portion of police van 113 is displayed using computer graphic techniques within world 101 as element 201, which is a part of CG Part 105.

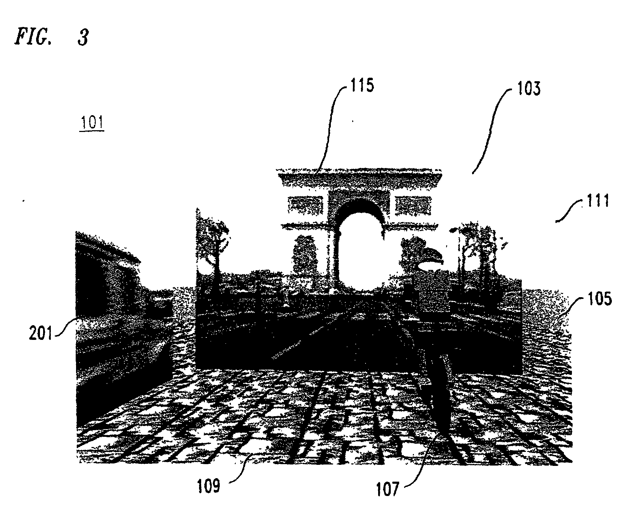

FIG. 3 shows world 101 of FIG. 1, but at a time even later than that of FIG. 2. Thus, at the time of FIG. 3, the frame of video being shown on screen 103 is from a view still closer to Arc de Triumph 115 than that of FIG. 2. As a result of the camera location when the frame of video on screen 103 that is shown in FIG. 3 was taken, none of police van 113 is visible within the current frame of video on screen 103 that is shown in FIG. 3. However, from the viewpoint of the user, looking at world 101 as it appears in FIG. 3, police van 113 should be visible to the user's left, notwithstanding that it is no longer within the boundaries of video screen 103. Therefore, the entirety of police van 113 is displayed using computer graphic techniques within world 101 as element 201, which is a part of CG Part 105. At least a portion of element 201 will continue to be displayed as part of CG Part 105 until element 201 passes completely from the user's viewpoint.

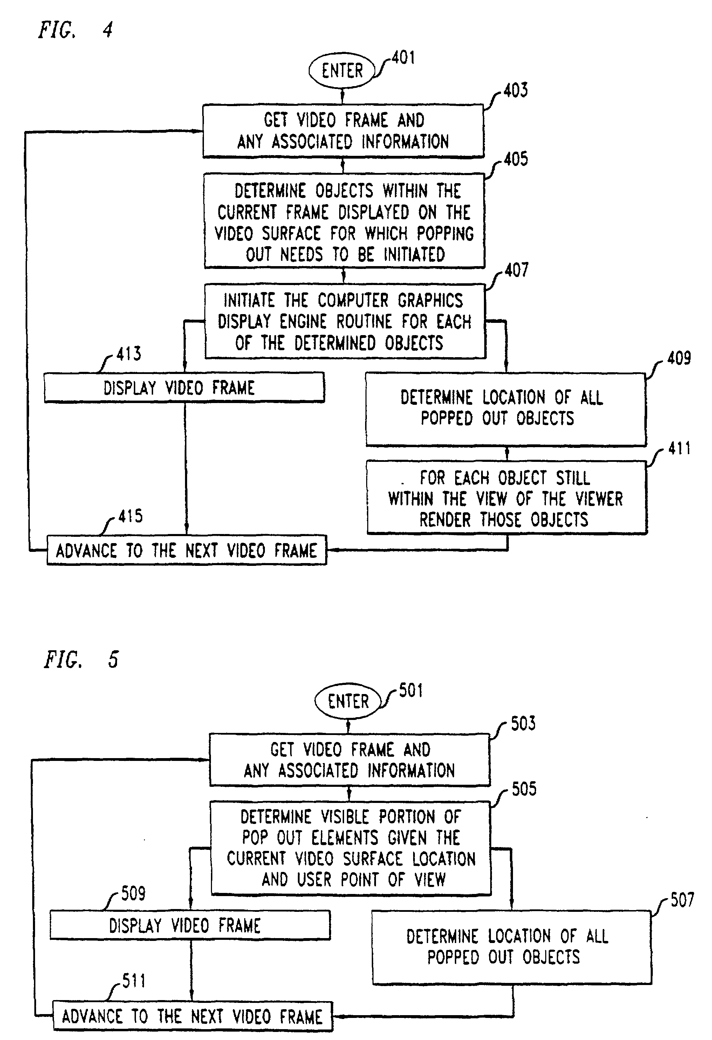

FIG. 4 shows an exemplary process by which objects within the field represented by the video surface that, due to their projected motion are to be displayed in the three dimensional world, e.g., in front of, to the side of, above, or below, the video surface, are so displayed using computer graphics techniques, so that the object "pops out" of the video surface. In typical embodiments of the invention, the objects to be displayed using computer graphics are predefined, and their location in the video and the time associated with its position within the video is known, so that the time and extent at which the object needs to be popped out of the video is known. However, the techniques of the invention may be employed with computers and software which are sufficiently sophisticated to track recognizable objects within the video surface and to develop computer graphics models from such video representations in order to create the popped out computer graphics.

The process is entered in step 401 when the user selects a video to view and the first frame of the video is to be displayed to a user. In step 403, the video frame to be displayed is retrieved. This may be achieved by retreving data representing the frame which is pointed to by a pointer. Such a frame pointer is set initially, e.g., in step 401, to point to the first frame of the video. Next, in step 405, it is determined if there are any objects with the current video frame which is to be displayed on the video screen for which popping out needs to be initiated. This may be achieved by employing additional information associated with the frame that describes any objects that need to be popped out. Such additional information may also include data necessary to render the object as well as motion data which indicates the path of the object. Alternatively, this step may be achieved by analyzing the content of the video frame, perhaps in conjunction with prior frames and future frames, to determine data necessary to render the object as well as motion data which indicates the path of the object. In addition, the viewpoint given to the user by the overall display may be incorporated in the determination. Such a viewpoint is determined by camera controls, which may be set by the user. Of course, a combination of the foregoing techniques may also be employed. In step 407, a computer graphics display engine routine is initiated for each of the objects determined in step 405. Each of these computer graphics routines are supplied with the information necessary to generate their respective objects as time passes with each frame for display on the video surface. For example, the information supplied for each object may include the aforementioned motion. data which indicates the path of the object.

Next, steps 409 and 411 are performed substantially in parallel with step 413. The degree of parallelism to be achieved should enable the popped out objects to be displayed substantially while the frame is displayed so that the user perceives them as being displayed together at the same time.

In step 409, a location on the viewscreen is determined for each of objects for which a computer graphics display engine routine is executing. In step 411, each of the objects for which a computer graphics display engine routine is executing that are still within the view of the viewer are rendered. Optionally, the computer graphics display engine routine for any object that has moved so that it is no longer within the view of the viewer may be deleted. However, such computer graphics display engine routines should only be deleted provided that it is known that the motion path of the object or the viewpoint of the viewer will not again bring that object into view.

The video frame is displayed in step 413. Control then passes from both steps 411 and 413 to step 415. In step 415 the next video frame is advanced to, provided that there is one. This may be achieved by incrementing or otherwise updating the value of the frame pointer. Thereafter, control passes back to step 403 and the process continues as described above.

In another implementation of the basic process of FIG. 4, the video screen is moving within the overall three-dimensional world being displayed to the user. Instead of determining which objects require the initiating of popping out based on information about objects in the frame being displayed on the video surface, as described above, the initiation may be based on the current location of the video screen within the overall three-dimensional world being displayed to the user. For example, if the video screen is displaying a video which gives the user the feeling of traveling down the Champs Elysees each successive video frame is actually a representation of the view from a location further and further down the street. As the frames are displayed and the user's viewpoint moves further down the street, it may be necessary for objects, e.g., a bus, a pedestrian, or a parked car, to pop off the video screen and become represented by computer graphics. The computer graphics display engine routine for each of the objects may be initiated as a function of the distance traveled by the video screen down the street, which, for example, may be either indicated in additional information associated with the frame, or, for simple situations, determined as a predetermined function of the time that the video has been running.

In another embodiment of the invention, a three-dimensional world ready for rendering, including all the elements that must pop out of the video surface, is modeled in memory. The three-dimensional world includes information such as the spatial location, size and orientation for each of the elements that must pop out. Motion information for the pop out elements may also be included. In this embodiment, the video screen is moving within the overall three-dimensional world that is being displayed to the user, as described above. Each frame of the video has spatial information which describes the location of the video screen within the three-dimensional world stored in memory. Such information may be implied, e.g., if the video screen is moving at a constant rate of speed, or it may be in separate information that is associated with the video frame. Using the information about each video pop out element as well as the information about the location of the video screen allows the spatial location of each video pop out element, as well as the portion of each video pop out element that is not blocked by the video screen and is within the viewpoint of the user, to be determined for each frame. Therefore, when the video screen is at a particular location, the portion of any video pop out element that is visible, e.g., in front of or to the side of, above, or below, the video screen may be rendered on the display. Thus, a match may be achieved between what is seen on the video screen and the computer graphic pop out elements.

A process for implementing this embodiment is shown, in flow chart form, in FIG. 5. Note that prior to entering the process shown in FIG. 5 a three-dimensional world including all the elements that must pop out of the video surface must be pregenerated and stored in memory. Also, spatial information which describes the location of the video screen within the three-dimensional world must be associated with frames of the video and stored in memory.

The process is entered in step 501 when the user selects a video to view and the first frame of the video is to be displayed to a user. In step 503, the video frame to be displayed is retrieved. This may be achieved by retrieving data representing the frame which is pointed to by a pointer. Such a frame pointer is set initially, e.g., in step 501, to point to the first frame of the video. In step 505, the location of the video screen within the three-dimensional world is determined. As noted, such information may be implied, e.g., if the video screen is moving at a constant rate of speed, or it may be in separate information that is associated with the video frame. Next, in step 507, the visible portion of any pop out elements is determined as a function of the current video surface location and the user viewpoint.

Thereafter, steps 507 and 509 are performed substantially in parallel. The degree of parallelism to be achieved should enable the popped out objects to be displayed substantially while the frame is displayed, so that the user perceives them as being displayed together at the same time. In step 507, the determined visible portion of each of the pop out elements is rendered. The video frame is displayed in step 509. Control then passes from both steps 507 and 509 to step 511. In step 511 the next video frame is advanced to, provided that there is one. This may be achieved by incrementing or otherwise updating the value of the frame pointer. Thereafter, control passes back to step 503 and the process continues as described above.

The foregoing assumes that the video frame to be displayed is set, which determines the location of the video screen within the three-dimensional world. However, the converse may also be implemented, i.e., the location of the video screen within the three-dimensional world is set, and this determines which video frame is to be displayed. To do so, in step 501 or 511, in which the video frame to be displayed next is determined, the desired location of the video screen within the three-dimensional world is ascertained. This location may be specified as a function of user input. For example, if the scene being displayed corresponds to the view of a user on a bicycle, the location of the video screen may be determined by sensors mounted to a stationary bicycle which detects riding of the bicycle by the user. A search of the information identifying the location of the frames is conducted to determine which frame corresponds to the current location of the screen, and the frame pointer is set to point to that frame.

The various method of determining which frame is displayed may be used separately, or their usage may be intermixed, depending on the need of the application being implemented.

Note that frames for which it is known that no pop out elements will be displayed need not be associated with spatial information which describes the location of the video screen within the three-dimensional world stored in memory. The video is simply displayed on the video screen and no pop out elements are rendered.

Any prestored information, such as frames, and information associated therewith, as well as models of the three-dimensional world, may be stored in different segments. Such segments may be located at a single physical location, e.g., within a single computer, or at different physical locations, such as in various computers that are connected by a network, and made available for use with embodiments of the invention. Moreover, the elements which process the information to generate the display may, but need not be, contained within a single computer.

One way that an object which pops out from a video into the computer graphics part of the world may be "investigated" by a viewer of the world, in accordance with the principles of the invention, is by receiving an indication of a selection of such an object by a user and, in response thereto, providing the user with additional information about the selected object. For example, additional information could be displayed on the display screen in response to the viewer selecting the object, such as with point and click selection system, the most common type of which are mice, trackballs, and touchpads. Alternatively, in response to the user selection, a new window could be overlayed on the video display containing additional information. Another way that this may be achieved is by receiving an indication of a selection of such an object by a user and, in response thereto, allowing the user to explore within the selected object. This may be done within the context of the world which is being explored or external thereto. One way this may be achieved is by having a uniform resource locator (URL) associated with the object in the CG part of the world. When the object is selected by the view, the viewer is taken to a page or file corresponding to the URL. Alternatively, the viewer may be jumped to another world model which corresponds to the object being further explored.

For example, if the user is bicycling down the Champs Elysees in Paris, France, as described above, and, as the Arc de Triomphe is passed by the bicyclist it pops out of the video, the user could click on the popped-out Arc de Triomphe which is now in the computer graphics part of the world and obtain historical information about it, e.g., displayed in a window on the screen. Alternatively, if the user is represented in the world as an avatar riding on a bicycle, the user avatar, in response to appropriate commands, such as mouse clicks, could be made to dismount the bicycle and further investigate the Arc de Triomphe, e.g., entering therein, ascending a set of stairs and looking out from one or more viewpoints. The user could then cause his avatar to return to the bicycle and continue the journey in the world which has a portion of the world distant from the point of view of the user represented in only two dimensions as a video on the video screen and the remainder of the world as computer graphics. The description of the interior of the Arc de Triomphe may have been directly associated with information employed for popping it out of the video or information pointing to the necessary description of the interior of the Arc de Triomphe, such as a pointer to another "world" or a URL, may have been directly associated with information employed for popping the Arc de Triomphe out of the video.

As another example, the user could enter a store which popped out of the video, and engage in virtual shopping therein. In accordance with an aspect of the invention, the particular store which is actually entered may be customized on a per user basis. Thus, for different users who are traversing the same course and seeing the same representations, e.g., an avatar, of a store or vendor cart that popped out from the video, who is the particular vendor that will serve the user and provide him with the virtual shopping service may be different for different users. In accordance with an aspect of the invention, the particular vendor may be selected as a function of the actual geographic location of the user, or a particular location that is associated with the user. If there is more than one user who are simultaneously exploring the same world together, e.g., two friends bicycling together, in accordance with an aspect of the invention, each friend may be served by a different vendor, e.g., as a function of their individual geographic locations. Alternatively, even if there is more than one user, and such users would otherwise be served by different vendors, e.g., as a function of their respective locations, in accordance with an aspect of the invention, such users could specify that a subset, or all of them, should be served by a single vendor.

In accordance with another aspect of the invention, when the proprietor of a virtual store, or his representative, e.g., electronic agent, detects the avatar of one or more persons passing the avatar of a store for which such proprietor's store corresponds to the virtual store for such passing persons, a message, such as an advertisement, or other communication, such as opening a communication channel, e.g., a chat service or voice communication channel, may be transmitted to, or initiated with, such passing persons. The communication may be general in nature or it may be customized as a function of information available regarding the passing persons. Advantageously, a feeling of community may be engendered in the virtual environment

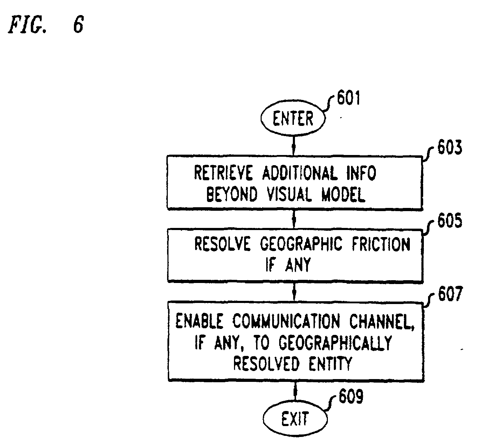

FIG. 6 shows steps of a process by which aspects of the invention may be implemented. The process of FIG. 6 is entered in step 601, which may be, for example, after completion of execution of step 411 of FIG. 4 or step 507 of FIG. 5. Thereafter, in step 603, additional information which is necessary to support the permitted interaction between the viewer and the popped out object and is beyond what is necessary to simply generate the computer graphics visual model of the object is retrieved. Such information may be included along with the information associated with the video that is used to pop the object out of the video. In step 605 any geographic functions associated with the object are resolved. For example, if the object which popped out of the video was a vendor's cart, such as may be found when bicycling around Central Park in New York City, the geographic function may specify a restaurant of the type that serves the same kind of food that is available from vendor cart. Such food may include, for example, frankfurters, hamburgers, sodas and snacks. The type of restaurant that corresponds to the cart is then used along with the actual physical location in the real world of the user, e.g., Omaha, Nebraska, to determine a local restaurant that serves food of the same type and provides delivery service. The information provided by exploring the cart is linked to information corresponding to the determined restaurant, e.g., available menu selections and prices therefor. The viewer may order an item from the restaurant by manipulating objects on the cart, and the restaurant could then deliver them directly to the viewer. Advantageously, users who are in different real world locations but are jointly negotiating a virtual world, may be supplied with substantially the same services, enhancing their experience in the virtual world. When there is more than one restaurant to which the object may be associated, the resolution of the object may also be made dependent upon knowledge about the user, such as may be stored in a user profile.

Next, in step 607, a communication channel may be enabled between the popped out object and an entity, which may have been geographically resolved as described above. For example, if the popped out object is the above-described vendor cart, a communication channel may be opened to the corresponding restaurant, or an agent therefor. The restaurant may transmit a message, such as "Get your hot dogs and cold soda here." The message may be manifest by having an avatar of a vendor behind the cart appear to speak the message, either using text-to-speech or by having a representation of the speech transmitted directly. A so-called "chat" service may be used to enable bidirectional communication between the viewer and the vendor.

Another exemplary object to which a communication channel may be opened is a billboard. Such billboards may operate in one of several ways. For example, the billboard when popped out may signal an advertiser of the approach of a potential customer and in response thereto the advertiser may immediately transmit a message to the billboard, in accordance with an aspect of the invention. The particular advertiser selected may be fixed worldwide for all viewers, or it may be geographically resolved for each viewer. Alternatively, the billboard when popped out may signal an advertiser of the approach of a potential customer and enable the advertiser to transmit a message to the billboard should the advertiser wish to do so, e.g., after having reviewed information which may be sent to it about the viewer, in accordance with an aspect of the invention.

The process exits in step 609 and then the processes of FIGs. 4 or 5 may be resumed.

The process of FIG. 6 need not be limited to occurring within the time span of one frame.

Those of ordinary skill in the art will recognize that any simulation of a joint exploration of a world may employ the principles of the invention. For example, users exploring a world may take together automobile rides, boat rides, plane rides, train rides, and even spaceship rides. A rowboat ride may be arranged for users having rowing machines which are coordinated with images of the world seen by the users. Alternatively, the users may be walking together through the world, e.g., each user walks on his own treadmill which is coordinated with images of the world seen by the users. Similarly, users can ski together, e.g., each is on a skiing simulator machine, such as a Nordictrak, which is coordinated with the images of the world seen by the users.

In addition, other forms of commercial transactions may be engaged in besides shopping. For example, users motoring down a virtual highway together may encounter a toll booth which pops out of the screen, and at least one of the users must pay the toll before their exploration of the world is allowed to proceed. Similarly, users may approach an attraction such as a virtual amusement park or a virtual safari. Ticket booths which appear on the video screen may pop out from the video screen and the users must each obtain, e.g., buy, or have bought for them, a ticket in order to proceed into the attraction.

## Claims

1. A method of accessing an object in a three dimensional world in which a first portion of said world is modeled as computer graphics and a second portion of said world is represented by a video, comprising the steps of:
determining that an object which was represented by a video has moved to a location that is being modeled as computer graphics;
changing the representation of said object from a video representation to one modeled as computer graphics;
receiving an indication of a selection of said object by a user; and
accessing additional information about said selected object.

2. The method as defined in claim 1 wherein said additional information is derived from text written on said object.

3. The method as defined in claim 1 or claim 2 further including the step of opening a communication channel between a viewer of said world and a location defined as a function of said additional information.

4. The method as defined in claim 1 wherein there is a plurality of users and further including the step of:
transmitting to at least two distinct subsets of said users additional information about said selected object;
wherein said additional information about said selected object that is transmitted to one of said subsets of users is different from the additional information about said selected object that is transmitted to another of said subsets of users.

5. The method as claimed in any preceding claim wherein said additional information is information that is not required to display said object as said computer graphics to a viewer having a viewpoint external to said object.

6. The method as claimed in any preceding claim wherein said additional information includes information for generating an interior view of said object.

7. A method of accessing an object in a three dimensional world in which a first portion of said world is modeled as computer graphics and a second portion of said world is represented by a video, comprising the steps of:
determining that an object which was represented by a video has moved to a location that is being modeled as computer graphics;
changing the representation of said object from a video representation to one modeled as computer graphics; and
opening a communication channel when an avatar of a user is within a specified distance of said object in said first portion of said world.

8. The method as defined in claim 7 wherein said communication channel connects said user and an actor on behalf of said object.

9. The method as defined in claim 7 wherein said world is explored by a plurality of users and wherein said opening step comprises opening a plurality of communication channels when an avatar of at least one user is within a specified distance of said object in said first portion of said world.

10. The method as defined in claim 9 wherein a first of said communication channels connects a user and an actor on behalf of a first real world item represented by said object and a second of said communication channels connects a user and an actor on behalf of a second real world item represented by said object, said first and second actors being different.

## Patentansprüche

1. Verfahren zum Zugreifen auf ein Objekt in einer dreidimensionalen Welt, bei dem ein erster Teil der Welt als Computergrafik modelliert ist und ein zweiter Teil der Welt durch ein Video dargestellt wird, mit den folgenden Schritten:
Bestimmen, daß sich ein Objekt, das durch ein Video dargestellt wurde, an eine Stelle bewegt hat, die als Computergrafik modelliert wird;
Ändern der Darstellung des Objekts von einer Videodarstellung zu einer als Computergrafik modellierten Darstellung;
Empfangen eine Angabe eine Auswahl des Objekts durch einen Benutzer; und
Zugreifen auf zusätzliche Informationen über das ausgewählte Objekt.

2. Verfahren nach Anspruch 1, bei dem die zusätzlichen Informationen aus auf das Objekt geschriebenem Text hergeleitet werden.

3. Verfahren nach Anspruch 1 oder 2, weiterhin mit dem Schritt des Öffnens eines Kommunikationskanals zwischen einem Betrachter der Welt und einer als Funktion der zusätzlichen Informationen definierten Stelle.

4. Verfahren nach Anspruch 1, bei dem es mehrere Benutzer gibt, und weiterhin mit dem folgenden Schritt:
Übertragen zusätzlicher Informationen über das ausgewählte Objekt zu zumindestens zwei getrennten Untergruppen der Benutzer;
wobei sich die zusätzlichen Informationen über das ausgewählte Objekt, die zu einer der Untergruppen von Benutzern übertragen werden, von den zusätzlichen Informationen über das ausgewählte Objekt unterscheiden, die zu einer anderen der Untergruppen von Benutzern übertragen werden.

5. Verfahren nach einem der vorhergehenden Ansprüche, bei dem es sich bei den zusätzlichen Informationen um Informationen handelt, die nicht erforderlich sind, um das Objekt als Computergrafik für einen Betrachter mit einem außerhalb des Objekts liegenden Blickpunkt anzuzeigen.

6. Verfahren nach einem der vorhergehenden Ansprüche, bei dem die zusätzlichen Informationen Informationen zum Erzeugen einer Innenansicht des Objekts enthalten.

7. Verfahren zum Zugreifen auf ein Objekt in einer dreidimensionalen Welt, bei dem ein erster Teil der Welt als Computergrafik modelliert ist und ein zweiter Teil der Welt durch ein Video dargestellt wird, mit den folgenden Schritten:
Bestimmen, daß sich ein Objekt, das durch ein Video dargestellt wurde, an eine Stelle bewegt hat, die als Computergrafik modelliert wird;
Ändern der Darstellung des Objekts von einer Videodarstellung zu einer als Computergrafik modellierten Darstellung; und
Öffnen eines Kommunikationskanals, wenn sich ein Avatar eines Benutzers innerhalb einer festgelegten Entfernung von dem Objekt in dem ersten Teil der Welt befindet.

8. Verfahren nach Anspruch 7, bei dem der Kommunikationskanal den Benutzer und einen Akteur im Namen des Objekts verbindet.

9. Verfahren nach Anspruch 7, bei dem die Welt durch mehrere Benutzer erforscht wird und bei dem der Öffnungsschritt das Öffnen von mehreren Kommunikationskanälen umfaßt, wenn sich ein Avatar mindestens eines Benutzers innerhalb einer festgelegten Entfernung von dem Objekt in dem ersten Teil der Welt befindet.

10. Verfahren nach Anspruch 9, bei dem ein erster der Kommunikationskanäle einen Benutzer und einen Akteur im Namen eines durch das Objekt dargestellten Elements einer ersten realen Welt verbindet und ein zweiter der Kommunikationskanäle einen Benutzer und einen Akteur im Namen eines durch das Objekt dargestellten Elements einer zweiten realen Welt verbindet, wobei der erste und der zweite Akteur nicht identisch sind.

## Revendications

1. Méthode d'accès à un objet dans un monde tridimensionnel, où une première partie dudit monde est modélisée sous forme infographique et une deuxième partie dudit monde est représentée par une vidéo, comprenant les étapes consistant à :
déterminer qu'un objet qui était représenté par une vidéo s'est déplacé vers un emplacement modélisé sous forme infographique ;
changer la représentation dudit objet pour passer d'une représentation vidéo à une représentation modélisée sous forme infographique ;
recevoir une indication d'une sélection dudit objet par un utilisateur; et
accéder à des informations supplémentaires concernant ledit objet sélectionné.

2. Méthode selon la revendication 1, dans lequel lesdites informations supplémentaires sont dérivées de texte écrit sur ledit objet.

3. Méthode selon la revendication 1 ou la revendication 2, comportant en outre l'étape consistant à ouvrir une voie de communication entre un observateur dudit monde et un emplacement défini en fonction desdites informations supplémentaires.

4. Méthode selon la revendication 1, dans laquelle il existe une pluralité d'utilisateurs, et comportant en outre l'étape consistant à :
transmettre à au moins deux sous-groupes distincts desdits utilisateurs des informations supplémentaires concernant ledit objet sélectionné ;
dans laquelle lesdites informations supplémentaires concernant ledit objet sélectionné transmises à l'un desdits sous-groupes d'utilisateurs sont différentes des informations supplémentaires concernant ledit objet sélectionné transmises à un autre desdits sous-groupes d'utilisateurs.

5. Méthode selon l'une quelconque des revendications précédentes, dans laquelle lesdites informations supplémentaires sont des informations qui ne sont pas requises pour afficher ledit objet sous forme infographique à un observateur dont le point de vue est externe audit objet.

6. Méthode selon l'une quelconque des revendications précédentes, dans laquelle lesdites informations supplémentaires comportent des informations visant à générer une vue intérieure dudit objet.

7. Méthode d'accès à un objet dans un monde tridimensionnel, où une première partie dudit monde est modélisée sous forme infographique et une deuxième partie dudit monde est représentée par une vidéo, comprenant les étapes consistant à :
déterminer qu'un objet qui était représenté par une vidéo s'est déplacé vers un emplacement modélisé sous forme infographique ;
changer la représentation dudit objet pour passer d'une représentation vidéo à une représentation modélisée sous forme infographique ; et
ouvrir une voie de communication lorsqu'un avatar d'un utilisateur se trouve à une distance spécifiée dudit objet dans ladite première partie dudit monde.

8. Méthode selon la revendication 7, dans laquelle ladite voie de communication connecte ledit utilisateur et un acteur au nom dudit objet.

9. Méthode selon la revendication 7, dans laquelle ledit monde est exploré par une pluralité d'utilisateurs, et dans laquelle ladite étape d'ouverture comprend l'ouverture d'une pluralité de voies de communication lorsqu'un avatar d'au moins un utilisateur se trouve à une distance spécifiée dudit objet dans ladite première partie dudit monde.

10. Méthode selon la revendication 9, dans laquelle une première desdites voies de communication connecte un utilisateur et un acteur au nom d'un premier article du monde réel représenté par ledit objet, et une deuxième desdites voies de communication connecte un utilisateur et un acteur au nom d'un deuxième article du monde réel représenté par ledit objet, lesdits premier et deuxième acteurs étant différents.
